Europäisches Patentamt

European Patent Office

Office européen des brevets

(19)

(11) Publication number : **0 514 162 A2**

# EUROPEAN PATENT APPLICATION

(12)

(21) Application number : **92304336.8**

(22) Date of filing : **14.05.92**

(51) Int. Cl.⁵ : **B29D 30/54**, G05B 19/42, B23Q 11/00, B23Q 17/24

(30) Priority : **17.05.91 JP 140748/91**

(43) Date of publication of application : **19.11.92 Bulletin 92/47**

(84) Designated Contracting States : **DE ES FR GB IT**

(71) Applicant : **BRIDGESTONE CORPORATION**
**10-1 Kyobashi 1-Chome, Chuo-Ku Tokyo 104 (JP)**

(72) Inventor : **Tomita, Shuji, c/o Bridgestone Corporation**
**Technical Centre 3-1-1, Ogawahigashi-cho Kodaira-shi, Tokyo (JP)**
Inventor : **Fukamachi, Yoshihiro, c/o Bridgestone Corporation**
**Technical Centre 3-1-1, Ogawahigashi-cho Kodaira-shi, Tokyo (JP)**

(74) Representative : **Silverman, Warren et al HASELTINE LAKE & CO. Hazlitt House 28 Southampton Buildings Chancery Lane London WC2A 1AT (GB)**

(54) **Skiving equipment and method for recapping tyre.**

(57)    Skiving equipment which is labour saving and which also permits the skiving work to be carried out to a predetermined extent includes a rotating member 6 for rotating a buffed tyre about an axis while supporting the tyre ; a camera 41 for photographing a belt portion of the tyre ; a camera controller 44 for analyzing skiving conditions, including a skiving position, from a photographed image obtained by the camera ; a grinder 20 which operates in accordance with skiving condition signals provided from the camera controller 44 to skive the belt portion of the tyre in each skiving position ; a proximity sensor 31 for detecting the position of wire embedded in the tyre ; an optical sensor 32 for checking whether wire is exposed or not ; and a controller 45 for controlling the operation of the rotating member 6 and that of the grinder 20 in accordance with information provided from the camera controller 44, proximity sensor 31 and optical sensor 32, the controller 45 controlling the movement of the grinder 20 in accordance with the skiving conditions, including a skiving position, provided from the camera controller 44, determining the number of skiving passes in one skiving position on the basis of the detected information provided from the proximity sensor 31, and controlling grinder 20 to stop the skiving work in the skiving position when exposure of wire is detected by the optical sensor 32.

EP 0 514 162 A2

This invention relates to skiving equipment and to a method for skiving a damaged part of a tyre automatically after carrying out buffing at the time of recapping the tyre.

Heretofore, the skiving work required in recapping a tyre has involved skiving a damaged part of the tyre using an air grinder held by a worker and having a special skiving blade (rasp) attached thereto. During the skiving operation, buffing powder is splashed at the surface to be skived, sparks are emitted as a result of contact of the skiving blade with wiring and the grinder undergoes vibration, all of which represent unpleasant and/or harmful conditions for persons operating the skiving equipment.

In Japanese Laid-Open Patent publication No. 164607/89, there is described tyre repairing equipment with which the skiving work is partially automated. With this tyre repairing equipment, a skiving operation, the application of rubber cement and the injection of rubber are carried out in turn on a damaged part of a tyre. In the skiving work, the position, size and depth of damage on the tyre surface are measured by means of a measuring device and the measured values thus obtained are inputted and registered to a scanning device. Then, the required degree of skiving is determined on the basis of such registered information, and an automatic skiving operation is performed on the tyre using a grindstone.

Thus, with the tyre repairing equipment described in the above-mentioned laid-open patent publication, it is necessary that the position, size and depth of a damage on the tyre surface be measured and the measured value be inputted to the scanning device for detection. These measuring and inputting operations are labour-intensive.

Furthermore, once the required degree of skiving is determined from the state of damage, a skiving operation is performed automatically in accordance with the required degree of skiving thus determined. Consequently, the skiving operation is allowed to proceed until the determined degree of skiving has been achieved, irrespective of the position of wires embedded in the tyre, so that such wires may be damaged or cut.

This may well result from a measurement error in determining the state of damage and this may lead to a required degree of skiving which is too small or which is too large then resulting in the wire being cut. This will make it impossible to recap the tyre in an exact manner. Therefore, ample care must be exercised in checking the state of damage of each tyre, and it is also necessary to take care to avoid the occurrence of error at the time of inputting the results of measurement to the scanning device for detection. These are considerable impositions on a worker.

It is an object of the present invention to provide skiving equipment for recapping a tyre which is capable of carrying out a skiving operation always to a like standard of accuracy without imposing a heavy burden on a worker.

According to the present invention, there is provided skiving equipment for use in recapping a tyre, including:

means for rotating a buffed tyre - about an axis while supporting the tyre;

photographing means for photographing a belt portion of the tyre;

image analyzing means for analyzing a photographic image of a belt portion of the tyre, produced with the photographing means, which belt portion includes a skiving position;

skiving means which operates in accordance with signals denoting required skiving conditions provided by said image analyzing means and which skives the belt portion of the tyre at each skiving position;

wire position detecting means for detecting the position of wire embedded in the tyre;

wire exposure checking means for checking whether the wire is exposed or not; and

control means for controlling the operation of said rotating means and that of said skiving means in accordance with information provided from said image analyzing means, said wire position detecting means and said wire exposure checking means,

said control means controlling the movement of said skiving means in accordance with skiving position and skiving conditions for skiving at said position, which skiving position and skiving conditions provided from said image analyzing means, determining the number of skiving passes required at one skiving portion of the tyre on the basis of the detected information provided from said wire position detecting means, and controlling said skiving means to stop the skiving work at said skiving position when exposure of the wire is detected by said wire exposure checking means.

This invention also provides a skiving method for use in recapping a tyre wherein skiving is performed while a buffed tyre is rotated about its axis in a series of steps, which method comprises:

photographing a belt portion of the tyre;

analyzing an image obtained by said photographing to determine a position to be skived;

positioning a skiving means onto said determined position;

detecting the position of wire (W) embedded in the tyre;

determining a number of skiving passes to be performed on the basis of said detected position of the wire;

skiving said belt portion at said position to be skived by said skiving means;

checking whether or not the wire (W) is exposed at a predetermined stage in the course of said skiving; and

stopping said skiving when an exposed wire (W) is detected by said checking or said determined number of skiving passes is completed without detecting the exposed wire.

If a suitable mark is made at a skiving position (a part to be skived) of a buffed tyre, the image analyzing means analyzes required skiving conditions, including a skiving position, from the image of the tyre surface photographed by the photographing means. The control means causes the skiving means to move to a determined skiving position, then determines the number of skiving passes required there on the basis of detected information on the wire position, and causes the skiving means to perform a skiving operation through a predetermined number of skiving passes. However, when exposure of the wire is detected by the wire exposure checking means, the skiving operation is stopped, even if only half completed, since otherwise the tyre will be rendered completely unusable.

All that is required manually is for a mark to be put in a skiving position on a tyre after buffing, and all the other operations are included in the skiving work which is carried out automatically, thus permitting great reduction of the labour costs.

Further, since the number of skiving passes required is determined on the basis of information on the wire position and the skiving operation is performed while repeatedly checking for exposure of wire and is stopped upon detection of the wire exposure, it is always possible to adjust the degree of skiving achieved if this proves necessary.

For a better understanding of the invention and to show how the same can be carried into effect reference will now be made, by way of example only, to the accompanying drawings wherein:

Figure 1 is a front view of one form of skiving equipment embodying the present invention;

Figure 2 is a side view of a principal portion of the apparatus of Figure 1;

Figure 3 is a front view of the principal portion of the apparatus of Figure 1;

Figure 4 shows schematically the photographing of a tyre using a camera;

Figure 5 is a diagram showing measurement values, relating to specific areas of the camera field;

Figure 6 is a diagram similar to Figure 5, showing marks detected in the camera field;

Figure 7 shows diagrammatically the use of an optical sensor for checking wire exposure;

Figure 8a is a plan view of the scanning pattern of the optical sensor;

Figure 8b is a sectional view taken along line B-B in Figure 8a;

Figure 9 is a flowchart showing over two sheets as Figures 9a and 9b a skiving work control procedure;

Figure 10 shows schematically the path of movement of a rasp;

Figure 11 shows schematically the skiving pattern achievable with the rasp of Figure 10;

Figure 12 shows diagrammatically two grinders integrally connected together;

Figure 13 shows diagrammatically a direct acting type grinder; and

Figure 14 is a front view of a tyre showing the disposition of the grinder of Figure 13 when acting thereon.

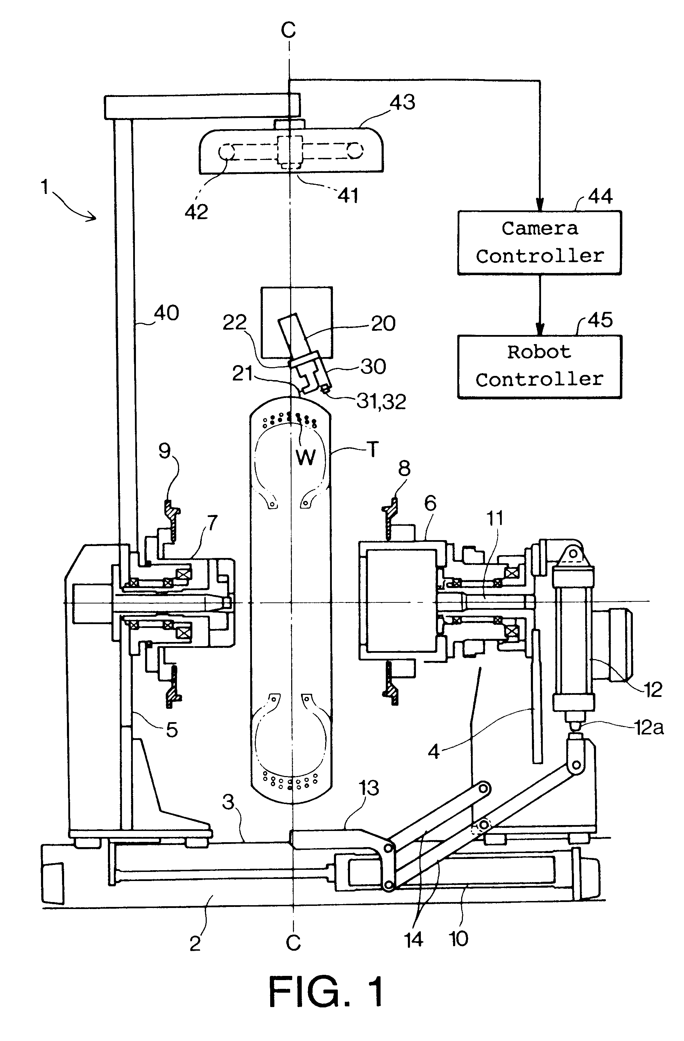

One skiving procedure embodying the invention will now be described with reference to Figures 1 to 11.

Figure 1 is a front view of an entire piece of skiving equipment according to the present invention. A rail 3 extends in the transverse direction on a base 2 and a pair of support members 4 and 5 are mounted on the rail 3 so as to be slidable to right and left thereon. The slidable support members 4 and 5 carry rotatable members 6 and 7, respectively, which project in an opposed relation to each other and which are provided with rim supports 8 and 9, respectively. The slidable support members 4 and 5 are moved symmetrically with respect to a reference plane C-C by means of a piston cylinder device 10. When the rotatable members 6 and 7 approach each other with the movement of the slidable support members 4 and 5, a tyre T is held between the rim supports 8 and 9.

The rotatable members 6 and 7 are rotatable about a common horizontal axis, and as they rotate, the tyre T, gripped by the rim supports 8 and 9, also rotates. Thus, the rotatable members 4 and 5 constitute rotating means for rotating the tyre T about the axis while supporting the tyre.

An air passage 11 supplies air under pressure into the tyre T through the rotatable member 6 from one slidable support member 4.

A cylinder device 12 is provided to the side of the slidable support member 4, and a piston rod 12a thereof and a tyre support member 13 are connected together through a link mechanism 14 so that the support member 13 can be moved up and down by means of the cylinder device 12.

The tyre T which has been buffed and fed to the skiving equipment 1 is supported on the support member 13 and moved upwards on the support member 13. Then, the slidable support members 4 and 5 approach each other and the right and left rim supports 8, 9 hold the bead portion of the tyre T therebetween. Thereafter air under pressure is fed into the tyre T through the air passage 11.

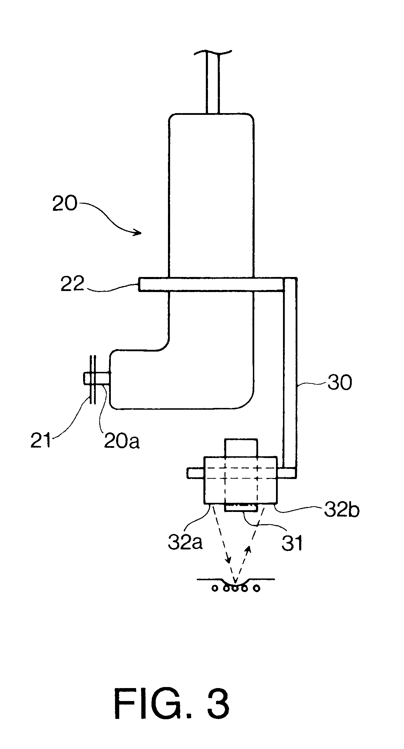

An air grinder 20 is disposed above the tyre T thus supported. The forwardly end of the air grinder 20 is bent at a right angle and a rotatable shaft 20a projects from this bent portion and carries a disc-like rasp 21, fitted thereon. (See Figure 3).

The air grinder 20 itself is supported by a support plate 22 so that the rasp 21 is positioned over the circumference of the tyre T.

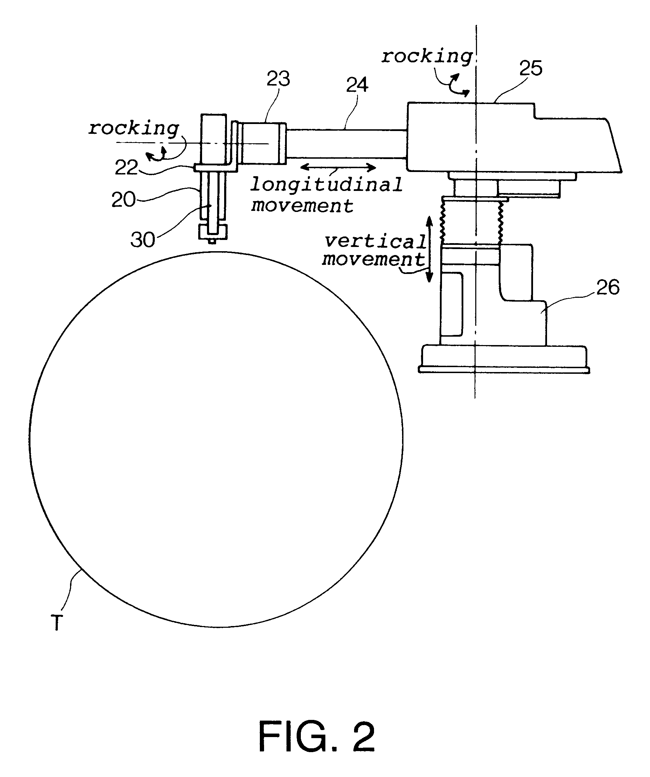

As shown in Figure 2, the support plate 22 is supported for undergoing rocking motion about a horizontal axis under the action of a rocking device 23, disposed behind the support plate. The rocking device 23 is fixed to an end portion of a rod 24 which is projecting forward, for reciprocating travel imparted to it by means of an extending/withdrawing device 25. The extending/withdrawing device 25 is supported for vertical movement with superimposed rocking motion along a vertical axis by means of a lifting/rocking device 26.

The position of the rasp 21 is adjusted by both the extending/withdrawing device 25 and the lifting/rocking device 26, and the angle of inclination of the rasp 21 is varied by the rocking device 23, so that the rasp can be opposed to a position on the tyre T where skiving needs to be carried out. While the rasp 21 rotates, it is rocked in accordance with the rocking motion of the lifting/rocking device, and as a result skiving is performed. Furthermore, as the rasp 21 is moved vertically by the lifting/rocking device 26, the depth of cut is adjusted to the required value.

A projecting member 30 extends from the support plate 22 which supports the air grinder 20, and a proximity sensor 31 and an optical sensor 32 comprising a light emitting element 32a and a light sensing element 32b are attached to an end portion of the projecting member 30 (see Figure 3). Therefore, by rocking the support plate 22 by means of the rocking device 23, the proximity sensor 31 and the optical sensor 32, instead of the rasp 21, can be opposed to the cutting position on the tyre T. For this purpose, the sensors 31 and 32 are moved down by the lifting/rocking device 26, and, as a result of such positioning of the sensors, the position of wires W embedded in the tyre T can be detected and exposure of the wires W can be detected by the optical sensor 32.

Mounted still further above the tyre T is a camera 41 suspended vertically from support bar 40 and removable therefrom. Around the camera 41 there is disposed a light 42 above which is positioned a reflecting plate 43.

When the rod 24 is withdrawn into device 25 and the air grinder 20 is in its retracted position, the camera 41 and the light 42 move down towards the tyre M and the light 42 illuminates the belt portion of the tyre T from a predetermined height above it. Then, the camera 41 photographs the illuminated belt portion.

The thus photographed image obtained is inputted to a camera controller 44 and analyzed thereby. The result of the analysis is inputted to a robot controller 45, which in turn sets the air grinder to a skiving ready state on the basis of the analysis result.

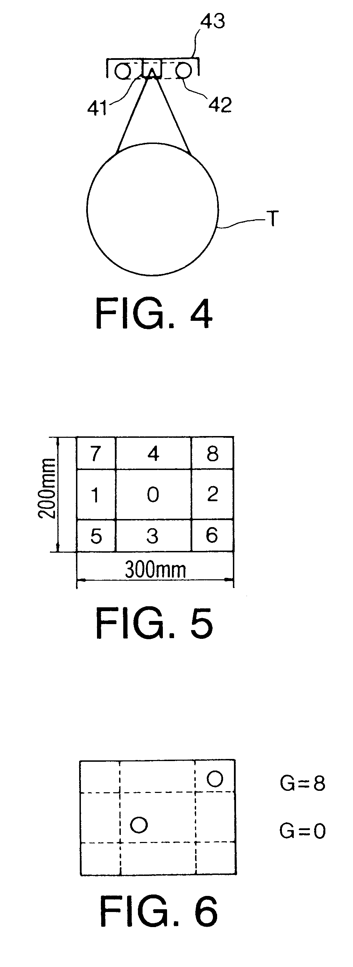

Figure 4 illustrates schematically a photographing operation using the camera 41, in which the surface of the belt portion of the tyre T is photographed in a camera field corresponding to the size of the tyre T.

In the discussion which follows, it is assumed that the camera field is adjusted to 300 mm in width and 200 mm in the circumferential direction by adjusting the height of the camera 41. In this case, the tyre T is rotated 200 mm at a time in the circumferential direction and photographed after every such rotation. In this way, the tyre surface is photographed over the whole circumference thereof.

Using white paint, for example, a mark is placed initially after buffing on each damaged part of the tyre T which is to be subjected to cutting. This mark falls into the field of an image which has been produced by the camera 41. If the camera field is divided into nine portions as shown in Figure 5 and numbers G (=0, 1, 2, .... 8) are affixed to the sodivided portions, the marked positions can be represented by such numbers.

Figure 6 shows the situation in which two marks (circular marks) have been viewed in the camera field. More specifically, one mark is present centrally (G = 0) of a crown centre portion and the other mark is present in a rear position (G = 8) of a right-hand crown shoulder portion. Each mark is identified according to its area and shape.

The number of sub-divisions of the camera field can be further increased and it is also possible to determine the mark positions using XY coordinates in which the X and Y axes represent the width direction and the circumferential direction, respectively.

The proximity sensor 31 is a metal sensitive sensor which senses magnetic field change and detects the distance to metal. When the proximity sensor 31 has approached to within a certain distance from steel wires W embedded in the tyre T, it turns on. Therefore, the distance from the rasp 21 to the wires W is determined from that approached distance, as a result of which the number of skiving passes required is determined.

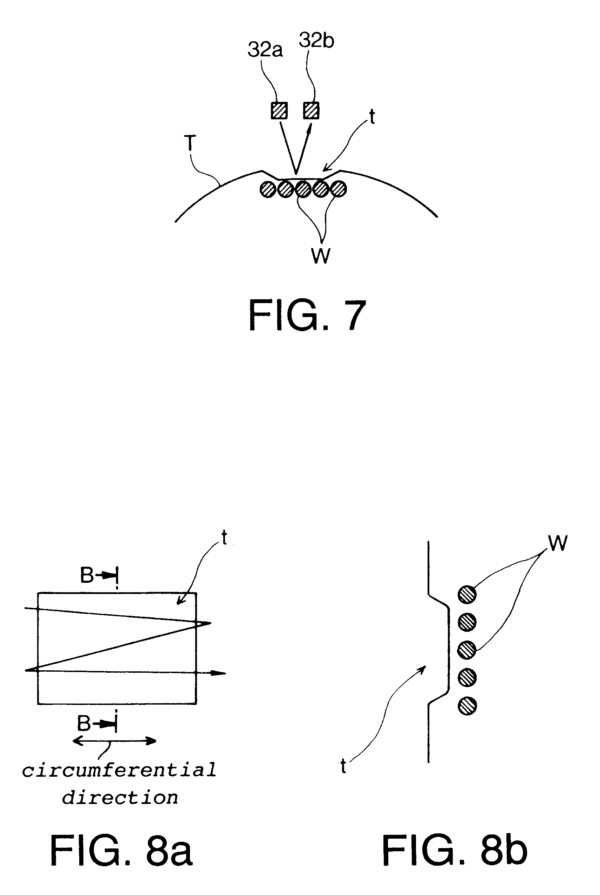

Light is emitted from the light emitting element 32a in the optical sensor 32, and is then reflected and this reflected light is viewed by the light sensing element 32b. When the wires W are embedded in the tyre T, the quantity of the reflected light is small, while when the wires W are exposed, the quantity of the light reflected by the wires is large. Thus, on the basis of the difference in the quantity of light reflected it is possible to check whether the wires W are exposed or not (Figure 7).

As indicated by an arrow in Figure 8a, the optical sensor 32 scans above an area $\underline{t}$ of the tyre T in a zigzag fashion and detects whether the wires W are exposed or not.

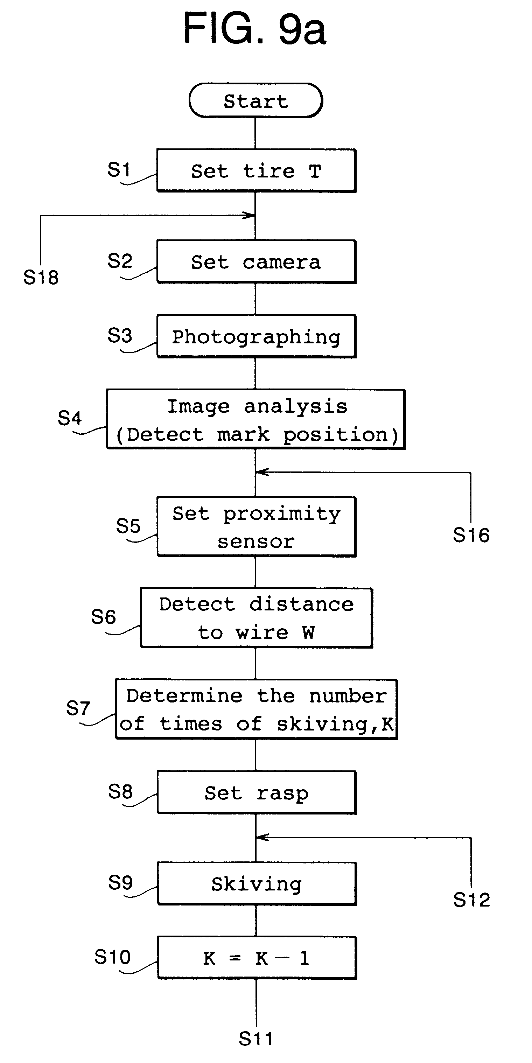

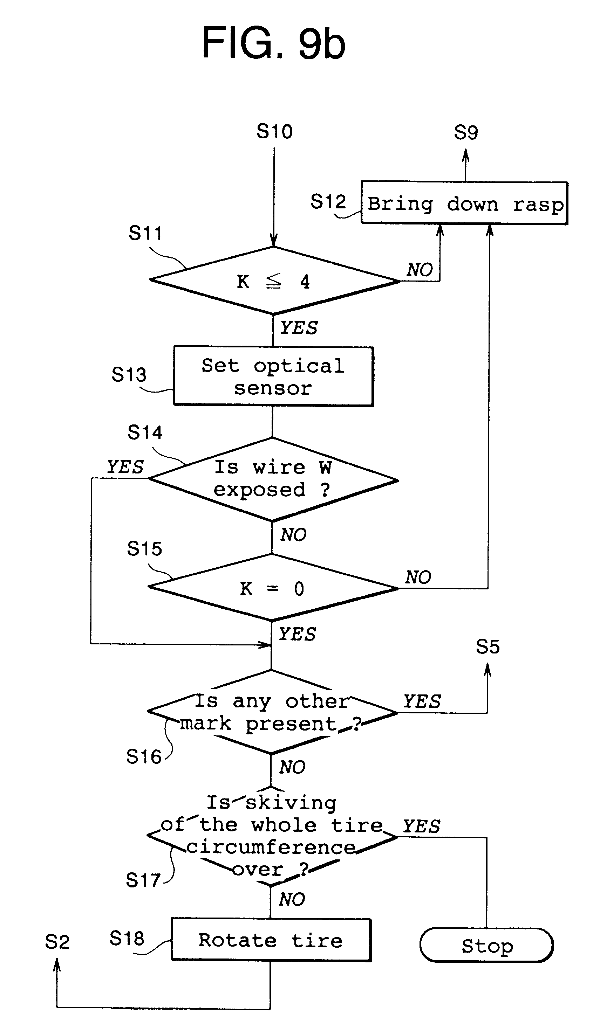

The description which follows indicates how a control procedure is executed by the robot controller 45 comprised by the skiving equipment of the above construction, and is given with particular reference to the flowchart of Figure 9.

After the tyre T is set to its skiving ready state by engagement with the rim supports 8 and 9 (step 1), the camera 41 is set to a photographing ready state (step 2) and the surface of the tyre T is photographed (step 3).

Then, in step 4, an image analysis is made by the camera controller 44 and a mark position on the tyre surface is detected and memorized. Thereafter, the proximity sensor 31 is set to the detected mark position (step 5) and the distance to the wires W is detected by the proximity sensor 31 (step 6). The number of skiving passes K is determined from the result of this detection (step 7).

Then, the rasp 21 is set to the skiving ready state at a required tilt angle according to the skiving position on the tyre (step 8) and skiving is performed by the rasp 21 (step 9).

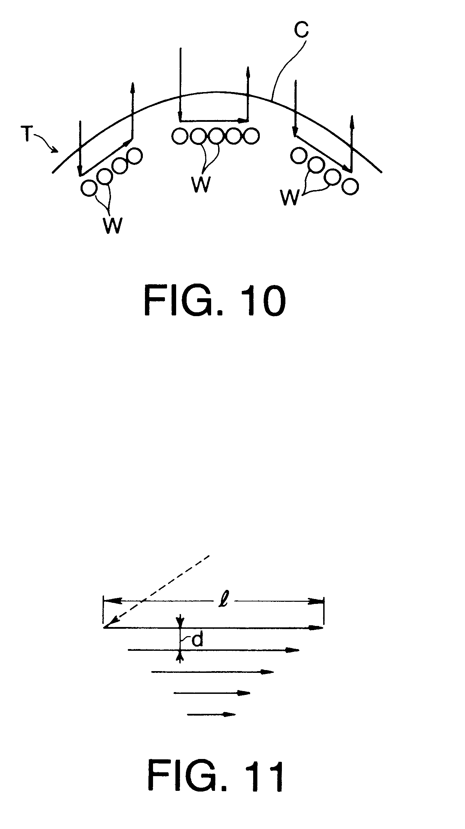

During the skiving operation, the rasp 21 is moved along a buffing contour C horizontally in the width direction if the skiving position is central, right upwards in the width direction if the skiving position is in the left-hand crown shoulder portion, or right downwards in the width direction if the skiving position is in the right-hand crown shoulder portion. This movement is achieved through the rocking motion and vertical movement of the lifting/rocking device 26 and is as shown in Figure 10, and is carried out while maintaining the posture of the rasp at the required tilting angle with respect to the surface of the tyre after buffing.

After a single skiving cycle is over in this way, the value of K is decreased (step 10), and whether K is not larger than 4 is checked (step 11). If K is still 5 or larger, operation moves on to step 12, in which the rasp 21 is brought down about 0.5 mm. Then, operation returns to step 9 for further skiving to be performed. The depth $\underline{d}$ of skiving increases 0.5 mm with every skiving cycle as shown in Figure 11, following the required skiving pattern, the transverse skiving length $\underline{\ell}$ decreases gradually as the skiving cycle proceeds.

The skiving cycle proceeds in accordance with the skiving pattern (steps 9, 10, 11 and 1), and after each of the last four skiving cycles, since $K \leq 4$, then operation advances from step 11 to step 13 rather than step 12 (at least initially). In the step 13, the optical sensor 32 is set above the position where the skiving operation was performed, to check whether the wires W are exposed or not (step 14). The optical sensor 32 scans the skived portion as shown in Figure 4a and checks whether the wires W are exposed or not.

When exposure of the wires W is not detected, a check is made to see whether K=0 or not (step 15). If K is not zero, operation advances to step 12, in which the rasp 21 is brought down, and skiving is performed again (step 9).

In this way, the steps 9, 10, 13, 14, 15 and 12 are repeated to effect skiving and once exposure of the wire W is detected, operation moves on directly from step 14 to step 16 to complete the skiving work for this skiving portion. If K=0 without detection of exposure of the wire W, operation also moves on from step 15 to step 16 to complete the skiving work for this skiving portion.

Thus, since the number of times of skiving takes place is determined on the basis of the position of the wires W embedded in the tyre T, the degree of skiving always being appropriate, even in the event of exposure of wires W in the last four skiving cycles, there is no fear of the wires being cut because the skiving work is terminated. When the skiving work for one skiving portion is over, operation moves on to step 16, in which a check is made to see if a mark is still present in any camera field. If the answer is in the affirmative, operation returns to step 5, in which the proximity sensor 31 is set above the position of that mark to detect the distance up to the wire W, followed by repetition of steps 5 to 15 to effect skiving.

When the skiving work for all of the marks present in one camera field is completed, operation shifts from step 16 to step 17, in which it is judged whether the skiving work for the entire circumference of the tyre has been completed or not. If the answer is in the negative, step 18 takes place, in which the tyre T is rotated until a belt portion of the tyre which has not been subjected to skiving assumes the top position. Then, operation returns to step 2, in which photographing is performed by the camera 41. Thereafter, the skiving work is conducted for a mark or marks present in another camera field.

In this way, the skiving work is carried out over the entire circumference of the tyre, if such should be necessary. All that is required for a machine operative is the putting of marks on the tyre after buffing, and all of the subsequent skiving operations are performed automatically, thus achieving considerable saving in labour costs.

Although in the above embodiment circular marks are made on the tyre after buffing to indicate skiving positions, flaws may be indicated using different shapes of marks (for example, circular, square and triangular marks). These marks can be distinguished from one another in the image analysis made by the camera controller 44. Thus, by inputting data other than skiving positions to the robot controller 45 it is possible to perform the skiving work under more detailed skiving conditions.

Although in the above embodiment checks are made to see if the wires W are exposed or not during the last four potential skiving passes, no limitation is placed on the number of skiving cycles, before which such checks are made. Moreover, no limitation is to be placed on the skiving depth for each pass which here is 0.5 mm.

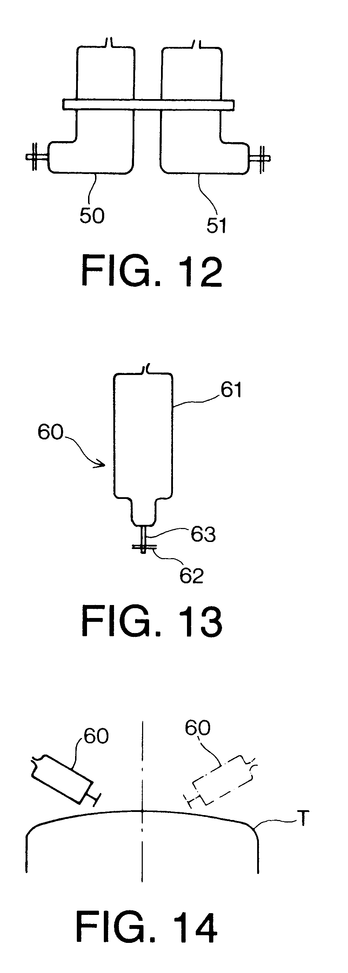

A motor-driven type of grinding may be used. Also, as shown in Figure 12, two left and right grinders 50, 51 may be integrally fixed together to skive the left and right sides of the tyre simultaneously in separately controlled operations.

There also may be used a direct acting type of grinder 60 having a rasp 62 positioned in an extending direction of a handle 61 and a rotatable shaft 63 positioned on the central axis of the handle 61, as shown in Figure 13. By changing the inclination of the grinder 60, as shown in Figure 14, the central portion as well as the right and left side portions of the tyre T can be skived.

The right and left portions of the tyre can be skived in directions opposed to each other.

Finally, the wire exposure check can be carried out using the camera 41. More specifically, since each skiving position is known, an image (window) for only the skiving portion is photographed by the camera 41 and judgement as to whether there is wire exposure is made on the basis of bright-dark difference which depend on whether the wires are exposed or not.

## Claims

1. Skiving equipment for use in recapping a tyre, including:

    means (6) for rotating a buffed tyre (T) about an axis while supporting the tyre;

    photographing means (41) for photographing a belt portion of the tyre;

    image analyzing means (44) for analyzing a photographic image of a belt portion of the tyre, produced with the photographing means (41), which belt portion includes a skiving position;

    skiving means (21) which operates in accordance with signals denoting required skiving conditions provided by said image analyzing means (44) and which skives the belt portion of the tyre at each skiving position;

    wire position detecting means (31) for detecting the position of wire (W) embedded in the tyre;

    wire exposure checking means (32) for checking whether the wire is exposed or not; and

    control means (45) for controlling the operation of said rotating means (6) and that of said skiving means (21) in accordance with information provided from said image analyzing means (44), said wire position detecting means (31) and said wire exposure checking means (32),

    said control means (45) controlling the movement of said skiving means (21) in accordance with skiving position and skiving conditions for skiving at said position, which skiving position and skiving conditions provided from said image analyzing means, determining the number of skiving passes required at one skiving portion of the tyre on the basis of the detected information provided from said wire position detecting means (31), and controlling said skiving means (21) to stop the skiving work at said skiving position when exposure of the wire (W) is detected by said wire exposure checking means (32).

2. Skiving equipment according to Claim 1, wherein said image analyzing means (44) is adapted to detect a mark pre-fixed to a position to be skived of the tyre belt portion at said skiving position, and to provide a skiving position signal to said control means, and wherein said control means (45) is adapted to cause said skiving means (21) to move to the skiving position in accordance with said skiving position signal.

3. Skiving equipment according to Claim 1 or 2, wherein said skiving means (21) is constituted by a grinder (60) provided with a skiving blade (62), said skiving blade (62) being fed a predetermined distance toward the tyre (T) at every skiving pass, and wherein the equipment is adapted so that when the residual number of skiving passes to be performed has reached a predetermined number, a check is made to see if wire (W) is exposed or not by said wire exposure checking means at every completion of a skiving pass.

4. Skiving equipment according to Claim 1, 2 or 3, wherein said wire position detecting means (31) is constituted by a proximity sensor which is sensitive to the presence of metal and detects the distance up to the metal, and said wire exposure checking means is constituted by an optical sensor (32) comprising a light emitting element (32a) and a light sensing element (32b), said light sensing element sensing light which has been emitted from said light emitting element and reflected by the surface of the tyre (T).

5. Skiving equipment according to any preceding claim, wherein said skiving means (21), said wire position detecting means (31) and said wire exposure checking means (32) are each disposed in a position above and close to that to be occupied by a tyre (T) so as to be movable away from said position and said photographing means (41) is disposed above said skiving means (21), wire position detecting means (31) and wire exposure checking means (32) so as to be movable in a vertical direction.

6. A skiving method for use in recapping a tyre wherein skiving is performed while a buffed tyre (T) is rotated about its axis in a series of steps, which method comprises:

    photographing a belt portion of the tyre;

    analyzing an image obtained by said photographing to determine a position to be skived;

    positioning a skiving means (21) onto said determined position;

detecting the position of wire (W) embedded in the tyre;

determining a number of skiving passes to be performed on the basis of said detected position of the wire;

skiving said belt portion at said position to be skived by said skiving means (21);

checking whether or not the wire (W) is exposed at a predetermined stage in the course of said skiving; and

stopping said skiving when an exposed wire (W) is detected by said checking or said determined number of skiving passes is completed without detecting the exposed wire.

7. A skiving method according to Claim 6, wherein said position to be skived is determined by an image analyzing means (44) detecting a mark prefixed to a position to be skived of the tyre belt portion.

8. A skiving method according to Claim 6 or 7, wherein said checking is carried out at every completion of a skiving pass after the residual number of skiving passes to be performed has reached a predetermined number.

# FIG. 1

# FIG. 2

**FIG. 3**

FIG. 4

FIG. 5

G = 8

G = 0

FIG. 6

FIG. 7

circumferential
direction

FIG. 8a

FIG. 8b

# FIG. 9a

```
          ╭─────────╮
          │  Start  │
          ╰─────────╯
               │
          ┌─────────────────┐
S1 ───────│   Set tire T    │
          └─────────────────┘
               │
          ┌─────────────────┐
S2 ───────│   Set camera    │
          └─────────────────┘
S18            │
          ┌─────────────────┐
S3 ───────│  Photographing  │
          └─────────────────┘
               │
          ┌─────────────────────┐
S4 ───────│   Image analysis    │
          │(Detect mark position)│
          └─────────────────────┘
               │
          ┌─────────────────┐
S5 ───────│  Set proximity  │
          │     sensor      │         S16
          └─────────────────┘
               │
          ┌─────────────────┐
S6 ───────│ Detect distance │
          │    to wire W    │
          └─────────────────┘
               │
          ┌──────────────────────┐
S7 ───────│Determine the number  │
          │ of times of skiving,K│
          └──────────────────────┘
               │
          ┌─────────────────┐
S8 ───────│    Set rasp     │
          └─────────────────┘
               │
          ┌─────────────────┐
S9 ───────│    Skiving      │         S12
          └─────────────────┘
               │
          ┌─────────────────┐
S10 ──────│   K = K - 1     │
          └─────────────────┘
               │
              S11
```

13

# FIG. 9b

S10

S9

S12 Bring down rasp

S11 K ≦ 4 — NO

YES

S13 Set optical sensor

S14 Is wire W exposed ?

YES

NO

S15 K = 0 — NO

YES

Is any other mark present ? — YES

S5

S16 NO

Is skiving of the whole tire circumference over ? YES

S17 NO

S2

S18 Rotate tire

Stop

14

FIG. 10

FIG. 11

FIG. 12

FIG. 13

FIG. 14